# EUROPÄISCHE PATENTANMELDUNG

(11) **EP 2 921 047 A1**
(43) Veröffentlichungstag der Anmeldung: **23.09.2015**
(21) Anmeldenummer: 15159770.5
(22) Anmeldetag: 19.03.2015
(51) Int. Cl.: A01K 1/00, A01K 15/02

(54) **Treibgitterhalter für ein Treibgitter einer Pferdeführanlage sowie Treibgitter mit Treibgitterhalter und Pferdeführanlage**

(30) Priorität: 21.03.2014 DE 102014205367
(71) Anmelder: Röwer & Rüb GmbH, 27321 Thedinghausen (DE)
(72) Erfinder: Bartelheimer-Giggel, Ronny, 27386 Hemsbünde (DE); Sudmann, Nils, 27321 Thedinghausen (DE)
(74) Vertreter: Eisenführ Speiser

(57) **Zusammenfassung**

Die Erfindung betrifft einen Treibgitterhalter für Treibgitter 24 einer Pferdeführanlage 10. Der Treibgitterhalter umfasst ein erstes Bauteil 30 und ein zweites Bauteil 32. Der Treibgitterhalter 26 umfasst ferner Verbindungsmittel 34, 40a, 40b zum Verbinden des ersten Bauteils mit dem zweiten Bauteil derart, dass diese um eine Drehachse des Verbindungsmittels gegeneinander verdrehbar sind. Zudem umfasst der Treibgitterhalter 26 Blockiermittel 44, 46 zum Blockieren einer Drehbewegung der drehbaren Verbindung in mindestens einer vordefinierten Position. Die Blockiermittel 44, 46 und/oder die Verbindungsmittel 34, 40a, 40b sind eingerichtet, um die Drehverbindung im Falle eines auf die Drehachse wirkenden Drehmoments unterhalb eines Drehmomentschwellenwertes in der mindestens einen vordefinierten Position zu blockieren und anderenfalls freizugeben.

## Beschreibung

Die vorliegende Erfindung betrifft einen Treibgitterhalter zum Halten eines Treibgitters in einer Pferdeführanlage sowie ein Treibgitter mit einem Treibgitterhalter und eine Pferdeführanlage.

Gemäß dem Stand der Technik sind Freilaufführanlagen bzw. Pferdeführanlagen, die im Folgenden auch kurz Führanlagen genannt werden, zum Trainieren von Pferden bekannt. Derartige Freilaufführanlagen weisen meist eine kreis- oder ovalförmige Longierbahn oder Trainingsbahn auf, die innenseitig und außenseitig mit einem Zaun oder einer Wand begrenzt ist.

Es sind Führanlagen bekannt, bei denen ein Drehstern vorgesehen ist, welcher radial von einem Drehzentrum nach außen ragende Tragarme aufweist. An jedem Tragarm hängt an seinem radial äußeren Bereich ein mit einem Treibgitterhalter befestigtes Treibgitter nach unten. Durch Drehen des Drehsterns bewegen sich die Treibgitter auf der Longierbahn voran, so dass sich zwischen den Treibgittern stehende Pferde veranlasst sehen, auf der Longierbahn ebenfalls entlang der Drehrichtung mitzugehen. Die Pferde bewegen sich demnach in ihrem Führbereich, der durch die innen- und außenseitige Begrenzung sowie zwei benachbarte Treibgitter festgelegt ist.

Demnach dient eine Pferdeführanlage zum Trainieren, also insbesondere Longieren, ohne einen Pferdetrainer bzw. Longenführer.

Neben der genannten Form der Pferdeführanlage sind auch Führanlagen bekannt, bei denen eine beliebige Form der Trainingsbahn bzw. Longierbahn - im Gegensatz zu einer kreisförmigen Longierbahn - möglich ist. Bei diesen Führanlagen werden die Führungsgitter an einer oder mehreren über der Trainingsbahn bzw. Longierbahn angeordneten Führungsschienen mit einem Treibgitterhalter eingehängt. Mehrere beabstandete Führungsgitter, die mehrere Führungsbereiche für mehrere Pferde bilden, werden mit einem Antriebswagen oder Laufwagen, der z. B. an einem der Führungsgitter im Bereich der Führungsschiene befestigt ist, voran bewegt.

Gemeinsam ist den Pferdeführanlagen, dass die Führungsgitter meist aus einem Metallrahmen bestehen, welcher mit einem Metallgitter bespannt ist. Gemäß dem Stand der Technik sind die Treib- oder Führungsgitter zwischen der innenseitigen und außenseitigen Begrenzung der Longierbahn sowie dem Boden beabstandet aufgehängt, so dass ein gewisser Abstand zwischen der Begrenzung sowie dem Fußboden und dem Rahmen des Führungsgitters vorhanden ist. Dieser Abstand dient, um Schäden am Führungsgitter sowie der Longierbahn selbst zu verhindern.

Da Pferde sogenannte Fluchttiere sind, kann es bei Angstzuständen der Pferde, z.B. durch plötzlich auftretende laute Geräusche, vorkommen, dass die Pferde selbst den geringen Abstand zwischen dem Führungsgitter und dem Boden als Fluchtmöglichkeit ansehen und daher versuchen, unter dem Treibgitter hindurch zu laufen. Hierzu sind die Treibgitter nach vorne und hinten pendelnd gelagert, so dass die Pferde im Fluchtfall unter den Treibgittern hindurch laufen können.

Wie bereits oben genannt, ist jedoch auch ein Abstand oder Zwischenraum zwischen dem Führungsgitter und den seitlichen Begrenzungen der Longierbahn vorhanden. Daher kommt es vor, dass ein Pferd im Fall eines Angstzustandes auch versucht, durch diesen seitlichen Zwischenraum zu flüchten. Bei einem derartigen Fluchtversuch ist die Verletzungsgefahr des Pferdes, insbesondere auch am Kopf durch Einklemmen des Kopfes wegen der Pendelmechanik, besonders groß.

Gerade für das Tierwohl ist es daher nötig, Vorkehrungen zu treffen, so dass sich die Pferde in der Freilaufführanlage nicht verletzen. Ein Eingreifen durch einen Longenführer oder Trainer, auf den hier ja gerade verzichtet werden soll, ist teilweise erst mit Verzögerung möglich. Gerade im Fall von Angstzuständen der Pferde, bei denen diese versuchen zu flüchten und dabei zu unkontrollierten Bewegungen neigen, müssen demnach alle Voraussetzungen dafür getroffen werden, dass eine Verletzung der Tiere weitestgehend verhindert wird.

Demnach ist es Aufgabe der Erfindung, einen Treibgitterhalter für ein Treibgitter einer Pferdeführanlage sowie ein Treibgitter mit einem Treibgitterhalter und eine Pferdeführanlage zu finden, bei dem die oben genannten Probleme des Standes der Technik behoben werden. Insbesondere soll die Verletzungsgefahr eines Pferdes, das versucht, seitlich am Treibgitter hindurch zu laufen, verringert werden. Jedenfalls soll eine alternative Lösung zu dem aus dem Stand der Technik Bekannten gefunden werden.

Diese Aufgabe wird durch einen Treibgitterhalter für Treibgitter einer Pferdeführanlage nach Anspruch 1 sowie ein Treibgitter mit einem Treibgitterhalter nach Anspruch 9 und eine Pferdeführanlage nach Anspruch 10 gelöst.

Die Erfindung umfasst dazu einen Treibgitterhalter für ein Treibgitter einer Pferdeführanlage. Treibgitter werden auch Führungsgitter und Pferdeführanlagen werden auch Freilaufführanlagen oder kurz Führanlagen genannt. Der Treibgitterhalter weist ein erstes und ein zweites Bauteil auf. Ein Bauteil umfasst z.B. eine oder mehrere miteinander verbundene Rechteckprofile, Rechteckprofile mit Anbauplatten oder weitere beliebig geformte Profile und Platten, insbesondere aus Metall.

Ferner umfasst der Treibgitterhalter ein Verbindungsmittel und ein Blockiermittel. Das Verbindungsmittel dient zum drehbaren Verbinden des ersten Bauteils mit dem zweiten Bauteil. Hierzu weist das Verbindungsmittel eine Drehachse auf, wobei die Bauteile um diese Drehachse zueinander drehbar sind. Das Bauteil ist demnach eingerichtet, dass das erste und das zweite Bauteil um die Drehachse des Verbindungsmittels gegeneinander verdrehbar sind.

Das Blockiermittel dient zum Blockieren der Drehbarkeit bzw. der Drehbewegung der Bauteile um die Drehachse in mindestens einer vordefinierten Position. Demnach ist ein Drehen der Bauteile aus-, zu- und/oder gegeneinander um die Drehachse des Verbindungsmittels mit den Blocklermittein in mindestens einer vordefinierten Position blockierbar. Diese Blockierung erfolgt also lediglich in der mindestens einen vordefinierten Position, also in einer oder mehreren vordefinierten Positionen.

Die Blockiermittel und/oder die Verbindungsmittel sind eingerichtet, also derartig ausgebildet, um die Drehbarkeit in der mindestens einen vordefinierten Position zu blockieren, solange ein auf die Drehachse wirkendes Drehmoment unterhalb einem Drehmomentschwellenwert, der vorbestimmt bzw. vordefiniert ist, zu blockieren. Überschreitet das Drehmoment den vordefinierten Drehmomentschwellenwert bzw. gleicht das Drehmoment diesem Drehmomentschwellenwert, so wird die Blockierung aufgehoben, alos eine Drehbewegung oder die Drehbarkeit erlaubt.

Demnach blockiert das Blockiermittel ein Verdrehen des ersten Bauteils gegenüber dem zweiten Bauteil, bis ein Drehmomentschwellenwert vom Drehmoment, das auf die Drehachse des Verbindungsmittels wirkt erreicht oder überschritten wird. Ein Erreichen oder Überschreiten des Drehmomentschwellenwerts erfolgt z. B., wenn durch eine Krafteinwirkung auf eines der Bauteile ein Drehmoment auf die Drehachse resultiert, während das andere Bauteil fest gehalten wird.

Beispielsweise ist eines der Bauteile mit einem Laufwagen, der in einer Führungsschiene einer Pferdeführanlage drehstabil eingehängt ist, verbunden. Das andere Bauteil ist mit einem Treib- bzw. Führungsgitter verbunden. Wird nun von einem Pferd, das versucht seitlich am Treibgitter vorbeizulaufen, eine Kraft seitlich auf das Treibgitter ausgeübt, so wird diese Kraft auf das mit dem Treibgitter verbundene Bauteil übertragen und es entsteht ein Drehmoment, das proportional zu dieser Kraft ist und auf die Drehachse des Verbindungsmittels wirkt. Ist das Drehmoment größer als der oder gleich dem Drehmomentschwellenwert, wie bei einem Fluchtversuch eines Pferdes angenommen werden kann, so wird die zuvor blockierte Drehbarkeit freigegeben, so dass das Gitter um die Drehachse des Treibgitterhalters dreht und den Fluchtweg für das Tier freigibt.

Gemäß einer ersten Ausführungsform ist das Blockiermittel ausgebildet, um die Drehbarkeit in mehreren vordefinierten Positionen zu blockieren. Dies dient z.B., um das Treibgitter, dessen Drehung bei einem Fluchtversuch aus einer ersten vordefinierten Position freigegeben wurde, zum kontrollierten erneuten Blockieren in einer anderen Position des Treibgitters, ohne dass das Treibgitter unkontrolliert um die Drehachse umherdreht.

Gemäß einer weiteren vorteilhaften Ausführungsform weisen die Bauteile jeweils einen Durchbruch, z.B. eine Bohrung, auf. Ferner weisen die Verbindungsmittel ein Verbindungselement und Sicherungsmittel auf. Das Verbindungselement ist z. B. ein zylindrisches Verbindungselement, wie ein Bolzen oder eine Gewindestange. Das Verbindungselement greift durch die Durchbrechungen hindurch und ist mit den Sicherungsmitteln gegen ein Herausziehen aus den Durchbrechungen gesichert.

Auf diese Weise ist eine einfache drehbare Verbindung zwischen dem ersten Bauteil und dem zweiten Bauteil herstellbar.

Gemäß einer weiteren vorteilhaften Ausführungsform weisen die Verbindungsmittel zudem mindestens ein Federelement auf. Mit dem Federelement ist das Verbindungselement gegenüber dem ersten Bauteil und/oder dem zweiten Bauteil federnd abgestützt, so dass die Federkraft zumindest auf eines der Bauteile wirkt und daraus eine Kraft entlang der Drehachse in Richtung auf das andere Bauteil resultiert. Demnach wirkt das Federelement mit einer Kraft auf die Bauteile bzw. zumindest auf eines der Bauteile, so dass diese gegeneinander bzw. zueinander gezogen werden.

Die beiden Bauteile sind gemäß einer Ausführungsform entlang der Drehachse mit einer Kraft, die entgegen der Federkraft wirkt, auseinander bewegbar, ziehen sich aber durch die Federkraft wieder gegeneinander, wenn die entgegen wirkende Kraft zurückgenommen wird, also die Federkraft größer als die entgegenwirkende Kraft ist.

Gemäß einer weiteren Ausführungsform weisen die Blockiermittel des Treibgitterhalters mindestens eine Vertiefung, d.h. eine oder mehrere Vertiefungen, in einem oder beiden Bauteilen auf. Ferner weisen die Blockiermittel mindestens einen Vorsprung, d.h. einen oder mehrere Vorsprünge, am anderen oder an beiden Bauteilen auf. Der bzw. jeder der Vorsprünge und die bzw. jede der Vertiefungen sind derart angeordnet, um an der mindestens einen vordefinierten Position ineinander zu greifen.

Es sind also eine oder mehrere Positionen durch die Anordnung der Blockiermittel vorgegeben, in denen die Blockiermittel die Ausrichtung der beiden Bauteile zu einander blockieren. Es sind demnach Vertiefungen und Vorsprünge in den Bauteilen vorgesehen, so dass in jeder der vordefinierten Positionen mindestens eine Vertiefung des einen Bauteils in mindestens einen Vorsprung des anderen Bauteils eingreift. Die Vertiefungen und Vorsprünge sind dazu an den Bauteilen jeweils an den Seiten der Bauteile angeordnet, die einander zu gerichtet sind. Vorsprünge und Vertiefungen dienen, um das erste Bauteil gegenüber dem zweiten Bauteil sicher in der bzw. den vordefinierten Positionen zu halten.

Gemäß einer weiteren Ausführungsform sind die Vertiefungen muldenartig bzw. weisen eine muldenartige Form auf. Die Vorsprünge weisen eine halbkugelartige Form auf, d.h. die Vorsprünge haben die Form einer Halbkugel oder eines Teils einer Halbkugel. Hierbei ist mit dem Wort "Kugel" nur eine Rundung gemeint und es kommt nicht auf einen gleichmäßigen Durchmesser bzw. Radius, bezogen auf einen Mittelpunkt, an.

Vorteilhaft an muldenartigen Vertiefungen und/oder halbkugelartigen Vorsprüngen ist, dass im Falle durch die Federkraft gegeneinander gezogener Bauteile die Kugeln sicher in den Mulden liegen und somit eine Drehbarkeit der drehbaren Verbindung sicher blockieren. Beim Überschreiten des Drehmomentschwellenwerts werden die Erhöhungen über die fließend ausgebildeten Kanten der muldenartigen Vertiefung bzw. der halbkugelartigen Vorsprünge aus den Vertiefungen - bei gleichzeitigem Auseinanderdrücken der Bauteile - bewegt. Ein Verdrehen des ersten Bauteils gegenüber dem zweiten Bauteil wird somit ermöglicht. Vorteil der muldenartigen Form der Vertiefung bzw. der Vertiefungen und der halbkugelartigen Form des Vorsprungs bzw. der Vorsprünge ist demnach, dass ein Einhaken, Verrasten oder Eingreifen mit darauffolgendem Heraustreten der Erhöhung aus der Vertiefung nahezu ohne Materialverluste und mit nahezu gleicher Kraft erfolgt.

Gemäß einer weiteren alternativen Ausführungsform ist das Verbindungselement des Verbindungsmittels eine Gewindestange und das Federelement ist auf der Gewindestange gelagert. Gemäß einer weiteren vorteilhaften Ausführungsform weist das Sicherungsmittel eine zum Gewinde der Gewindestange passende Mutter auf, so dass mit der Mutter durch Drehen der Mutter auf der Gewindestange das Maß der Spannung des Federelements einstellbar ist.

Vorteilhafterweise ist dadurch ein derartiger Drehmomentschwellenwert einstellbar, dass ein Drehmoment, das üblicherweise bei einem Fluchtversuch ausgeübt wird, oberhalb des Drehmomentschwellenwertes liegen wird, so dass das Blockiermittel und/oder die Verbindungsmittel die Drehbarkeit um die Drehachse erlauben bzw. freigeben. Andererseits ist der Drehmomentschwellenwert derart einstellbar, dass im Normalfall, wenn das Tier also nicht flüchtet, das Gitter durch die Blockiermittel sicher in seiner Position gehalten wird.

Ferner umfasst die Erfindung ein Treibgitter mit einem Treibgitterhalter gemäß einer der oben genannten Ausführungsformen und eine Pferdeführanlage mit mindestens einem derartigen Treibgitter. Derartige Pferdeführanlagen haben den Vorteil, dass damit unbeaufsichtigt Pferde trainieren werden können, wobei die Gefahr reduziert wird, dass sich ein Pferd während des Trainierens aufgrund einer Fluchtreaktion verletzt.

Nachstehend ist die Erfindung anhand von Ausführungsbeispielen unter Bezug auf die beiliegenden Figuren näher beschrieben. Es zeigen:
- Fig. 1: den Schnitt durch eine Trainingsbahn einer Pferdeführanlage,
- Fig. 2: eine perspektivische Ansicht eines Treibgitterhalters,
- Fig. 3: einen Teilschnitt aus der Frontansicht auf den Treibgitterhalter aus Fig. 2 und
- Fig. 4: einen Teilschnitt aus der Seitenansicht auf den Treibgitterhalter aus Fig. 2 und 3.

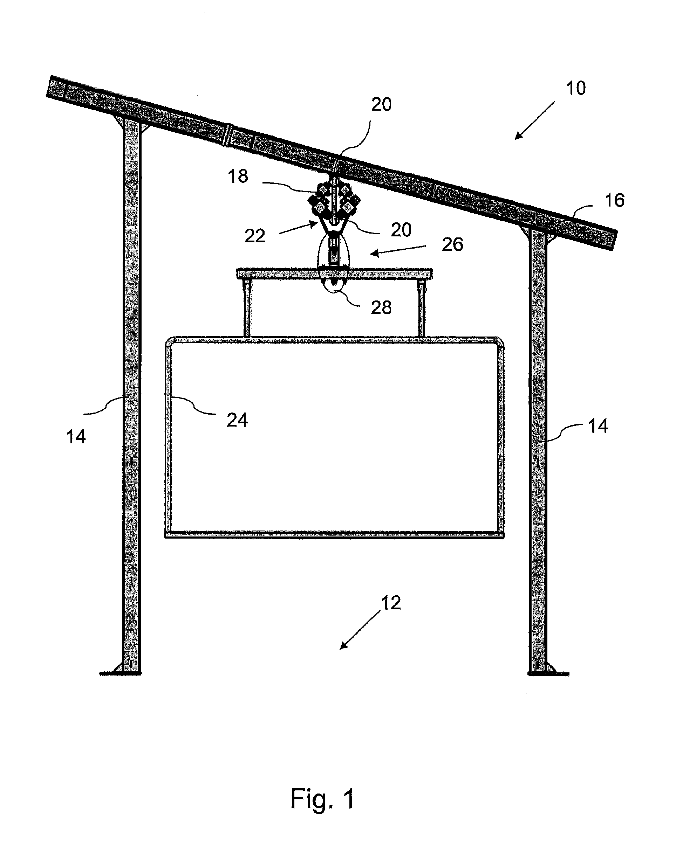

Fig. 1 zeigt eine Pferdeführanlage 10 im Schnitt durch seine Trainingsbahn 12. Die Trainingsbahn 12 ist links- und rechtsseitig durch Wände 14 begrenzt. Die Wände 14 sind mit einem Dach 16 verbunden. Das Dach ist derartig verstärkt, so dass an diesem eine Führungsschiene 18 mit zwei Fahrschienen 20 aufhängbar ist. An der aufgehängten Fahrschiene 20 läuft ein Laufwagen 22 entlang der Fahrschienen. Der Laufwagen ist im Wesentlichen drehstarr mit den Führungsschienen verbunden. Ferner ist ein Treibgitter 24 dargestellt, dass mit einem Treibgitterhalter 26 mit dem Laufwagen 22 bzw. der Fahrschiene 20 verbunden ist.

Das Treibgitter 24 ist gelenkig mit dem Treibgitterhalter 26 verbunden, so dass ein horizontales Schwenken, also ein Hochklappen nach vorne oder nach hinten des Treibgitters 24 gegenüber dem Treibgitterhalter 26 erfolgen kann. Das Treibgitter 24 wird durch die Schwerkraft in einer im Wesentlichen vertikalen Position gehalten. Ferner weist der Treibgitterhalter 26 Merkmale zum Drehen des Treibgitters um eine vertikale Achse auf. Diese Merkmale sind im Wesentlichen in einem Ausschnitt 28 angeordnet und hier zunächst nur überblickshaft im Zusammenhang mit der Pferdeführanlage 10 dargestellt. Eine detailliertere Darstellung folgt nachstehend.

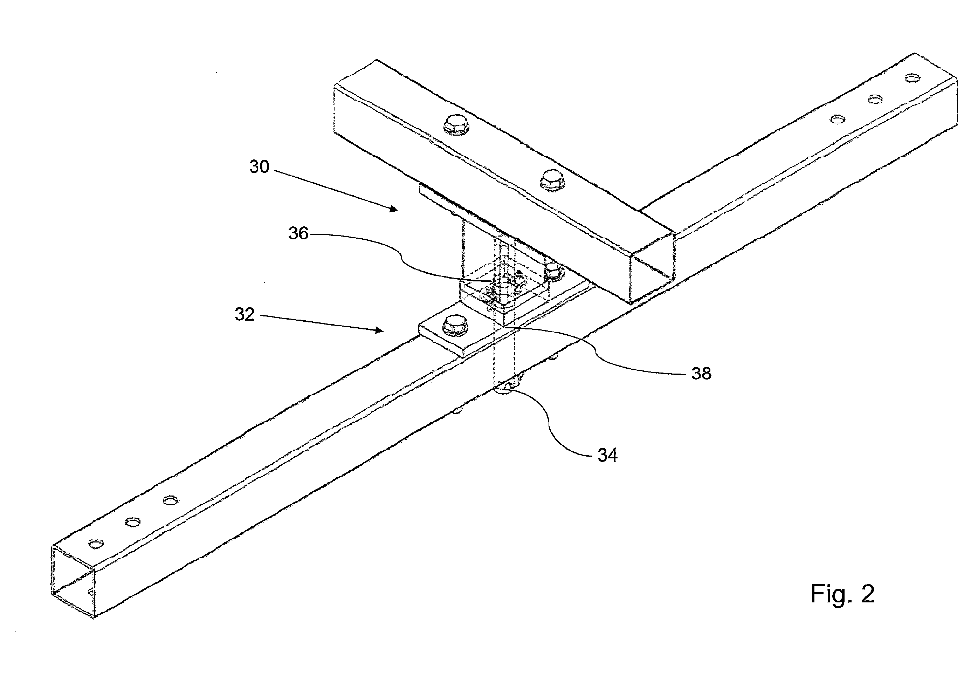

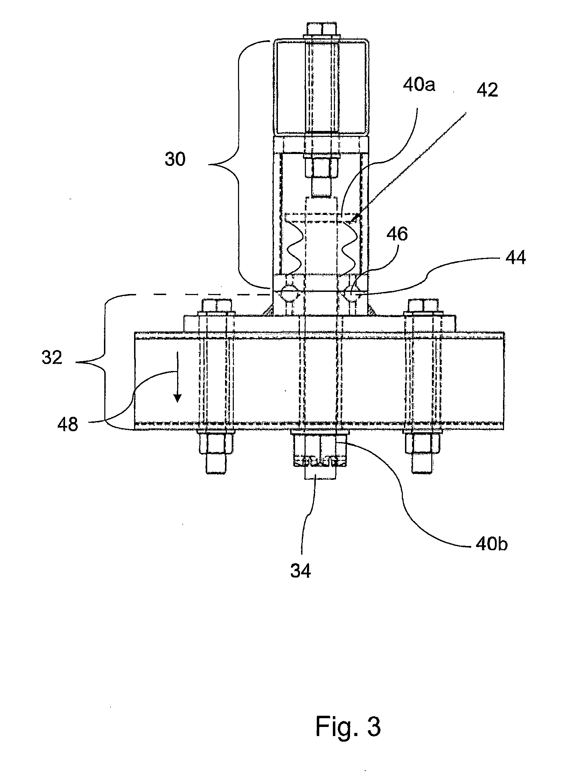

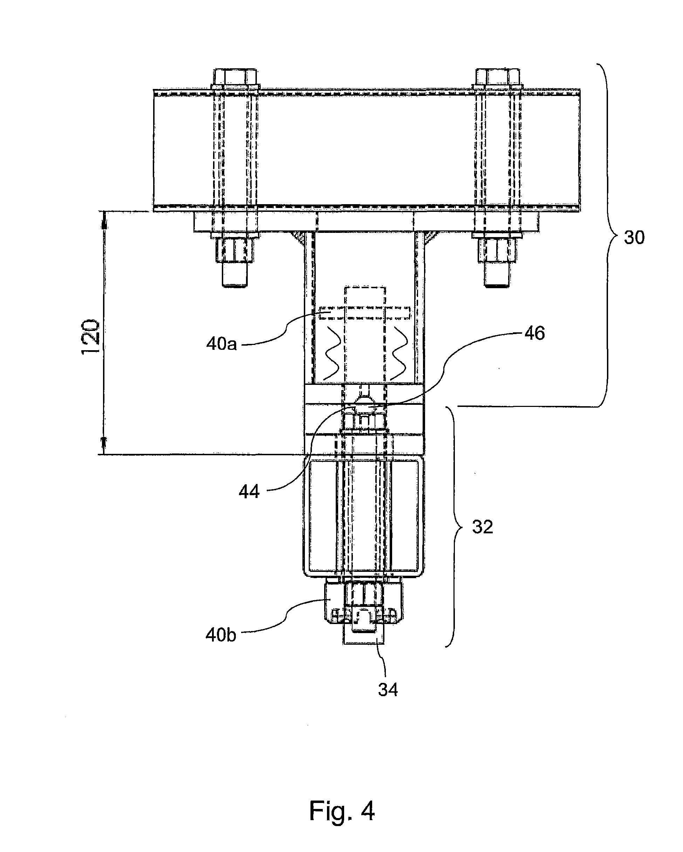

Fig. 2 zeigt eine perspektivische gegenüber Fig. 1 vergrößerte Ansicht eines Treibgitterhalters 26. Der Treibgitterhalter 26 weist ein erstes Bauteil 30 und ein zweites Bauteil 32 auf. Das erste Bauteil 30 ist gegenüber dem zweiten Bauteil 32 mit einem Verbindungselement 34 verbunden. Die Längsachse des Verbindungselements 34 bildet eine Drehachse, um die das erste Bauteil 30 gegenüber dem zweiten Bauteil 33 drehbar ist. Hierzu weist das erste Bauteil 30 einen Durchbruch 36 bzw. eine Bohrung 36 auf. Ferner weist auch das zweite Bauteil 32 einen Durchbruch 38 bzw. eine Bohrung 38 auf. Das Verbindungselement 34 ist vorliegend eine Gewindestange, die durch die Bohrungen 36, 38 bzw. Durchbrechungen 36, 38 hindurch greift. Ferner sind Sicherungsmittel 40a, 40b dargestellt. Zur besseren Übersicht der Funktion wird in den Fig. 3 und 4 jeweils ein Teilschnitt auf den Treibgitterhalter 26 betrachtet.

Fig. 3 zeigt dazu einen Teilschnitt aus der Frontansicht auf den Treibgitterhalter und Fig. 4 einen Teilschnitt aus der Seitenansicht auf den Treibgitterhalter. Das Verbindungselement 34 bildet zusammen mit Sicherungselementen 40a, 40b ein Verbindungsmittel. Das Verbindungsmittel 40a stellt hier ein Widerlager dar, das über ein Federelement 42 gegenüber dem ersten Bauteil 30 federnd abgestützt ist. Das Sicherungsmittel 40b entspricht einer Mutter, die auf das Verbindungelement 42, nämlich die Gewindestange, aufgeschraubt ist. Durch Drehen der Mutter 40b ist die Spannung des Federelements 42 einstellbar. Ferner zeigen die Fig. 3 und 4 Vertiefungen 44 im zweiten Bauteil 32. Die Vertiefungen sind muldenartig ausgebildet, so dass diese abgeschrägte Kanten aufweisen. Ferner weist das erste Element 30 Erhöhungen 46 auf, die durch in Vertiefungen 44 befestigten Kugeln 46 erzeugt sind.

Wirkt also auf das zweite Bauteil 32 seitlich eine Kraft, so wird das zweite Bauteil 32 in Richtung 48 gedrückt, da die Erhöhungen 46 durch das Drehmoment aus den Vertiefungen 44 über die abgeschrägten Kanten geschoben werden und damit eine Kraft entgegen der Federkraft 42 erzeugt wird. Wird also von einem feststehenden ersten Bauteil 30 ausgegangen, werden bei gleichzeitiger Drehung um die Längsachse bzw. Drehachse des Verbindungselements 34 die Bauteile 30, 32 auseinander bewegt, da sich die Erhöhungen 46 über die abgeflachten Ränder der Vertiefungen 44 aus den Vertiefungen 44 heraus bewegen. Dies erfolgt, wenn das Drehmoment, das über das zweite Bauteil 32 auf die Drehachse bzw. die Längsachse des Verbindungselements 34 wirkt, auf oder oberhalb eines Drehmomentschwellenwerts liegt, der durch die Spannung des Federelements 42 festgelegt ist. Wird dieser Drehmomentschwellenwert also erreicht oder überschritten, so reicht die Kraft aus, um die Feder 42 soweit zu spannen, dass eine Drehbewegung um die Längsachse bzw. Drehachse des Verbindungselements 34 zugelassen wird. Die in den Fig. 1 bis 3 dargestellte Position des ersten Bauteils 30 gegenüber dem zweiten Bauteil 32 entspricht nach alledem einer ersten vordefinierte Position.

## Patentansprüche

1. Treibgitterhalter für Treibgitter (24) einer Pferdeführanlage (10), umfassend:
- ein erstes Bauteil (30),
- ein zweites Bauteil (32),
- Verbindungsmittel (34, 40a, 40b) mit einer Drehachse zum drehbaren Verbinden des ersten Bauteils (30) mit dem zweiten Bauteil (32),
- Blockiermittel (44, 46) zum Blockieren einer Drehbewegung der Bauteile (30, 32) um die Drehachse der Verbindungsmittel (34, 40a, 40b) in mindestens einer vordefinierten Position,
wobei die Blockiermittel (44, 46) und/oder die Verbindungsmittel (34, 40a, 40b) eingerichtet sind, um die Drehbewegung im Falle eines auf die Drehachse wirkenden Drehmoments unterhalb eines Drehmomentschwellenwerts in der mindestens einen vordefinierten Position zu blockieren und anderenfalls freizugeben.

2. Treibgitterhalter nach Anspruch 1,
wobei die Bauteile (30, 32) jeweils einen Durchbruch (36, 38) aufweisen und die Verbindungsmittel (34, 40a, 40b) ein Verbindungselement (34), insbesondere ein zylindrisches Verbindungselement (34), z. B. einen Bolzen, und Sicherungsmittel (40a, 40b) umfassen,
wobei das Verbindungselement (34) durch die Durchbrechungen (36, 38) hindurch greift und mit den Sicherungsmitteln (40a, 40b) gegen Herausziehen aus den Durchbrechungen (36, 38) gesichert ist.

3. Treibgitterhalter nach Anspruch 1 oder 2,
wobei die Verbindungsmittel (34, 40a, 40b) ferner mindestens ein Federelement (42) umfassen und mit dem Federelement (42) das Verbindungselement (34) gegenüber dem ersten Bauteil (30) und/oder dem zweiten Bauteil (32) federnd abgestützt ist, derart, dass die Federkraft in Richtung der Drehachse wirkt und die Bauteile (30, 32) gegeneinander drückt.

4. Treibgitterhalter nach einem der vorhergehenden Ansprüche,
wobei die Blockiermittel (44, 46) mindestens eine Vertiefung (44) in einem der Bauteile (30, 32) und mindestens einen Vorsprung (46) am anderen Bauteil (30, 32) umfassen,
wobei der Vorsprung (46) und die Vertiefung (44) angeordnet sind, um an der mindestens einen vordefinierten Position ineinander zu greifen.

5. Treibgitterhalter nach Anspruch 4,
wobei die Vertiefung (44) eine muldenartige und/oder der Vorsprung (46) eine halbkugelartige Form aufweisen.

6. Treibgitterhalter nach Anspruch 4 oder 5,
wobei der Vorsprung (46) gebildet ist, indem eine Kugel in einer Vertiefung (44) in einem der Bauteile (30, 32) befestigt ist.

7. Treibgitterhalter nach einem der vorhergehenden Ansprüche,
wobei das Verbindungselement (34) eine Gewindestange, das Federelement (42) auf der Gewindestange gelagert und die Feder einerseits an einem Widerlager (40a) der Gewindestange und andererseits an einem der Bauteile (30, 32) abgestützt ist.

8. Treibgitterhalter nach Anspruch 7,
wobei die Sicherungsmittel (40a, 40b) mindestens eine zum Gewinde der Gewindestange passende Mutter (40b) aufweisen und mit der Mutter (40b) die Spannung des Federelements (42) durch Drehen der Mutter auf der Gewindestange einstellbar ist.

9. Treibgitter (24) mit einem Treibgitterhalter (26) nach einem der Ansprüche 1 bis 7.

10. Pferdeführanlage (10) mit mindestens einem Treibgitter (24) nach Anspruch 9.
